# EUROPÄISCHE PATENTSCHRIFT

(11) **EP 3 244 774 B1**
(45) Veröffentlichungstag und Bekanntmachung des Hinweises auf die Patenterteilung: **09.01.2019**
(21) Anmeldenummer: 16705111.9
(22) Anmeldetag: 16.02.2016
(51) Int. Cl.: A47B 1/05

(54) **VERBREITERBARER TISCH MIT CRASH-EINZUGSFUNKTIONS**
EXTENDABLE TABLE COMPRISING CRASH RETRACTION FUNCTION
TABLE EXTENSIBLE À FONCTION D'ESCAMOTAGE EN CAS DE CHOC

(30) Priorität: 16.03.2015 DE 102015204705
(43) Veröffentlichungstag der Anmeldung: 22.11.2017
(73) Patentinhaber: Siemens Mobility GmbH, 81739 München (DE)
(72) Erfinder: SCHMIDT, Gerhard, 45127 Essen (DE)
(86) Internationale Anmeldenummer: PCT/EP2016/053240
(87) Internationale Veröffentlichungsnummer: WO 2016/146325

(56) Entgegenhaltungen:
- EP-A1- 2 215 926
- DE-A1-102013 208 362
- DE-C1- 3 624 156
- DE-C1- 4 001 448

## Beschreibung

Die Erfindung bezieht sich auf einen verbreiterbaren Tisch nach dem Oberbegriff von Anspruch 1.

Danach ist vorgesehen, einen verbreiterbaren Tisch mit einer Grund-Tischplatte und mit mindestens einer neben der Grund-Tischplatte platzierbaren Ergänzungs-Tischplatte, die als eine mittels einer Hauptführung schräg nach unten unter die Grund-Tischplatte führbare Einschubplatte ausgebildet ist, wobei sie zwischen einer vollständig ausgefahrenen und einer vollständig eingeschobenen Position verfahrbar ist, und für die vollständig ausgefahrene Position eine Arretierung der Ergänzungs-Tischplatte gegenüber der Grund-Tischplatte derart vorgesehen ist, dass ihre Horizontalbewegung in Richtung auf die Grund-Tischplatte verhindert ist.

Ein solcher verbreiterbarer Tisch ist beispielsweise aus der DE 10 2011 087 346 A1 bekannt.

Ein solcher erweiterbarer Tisch schafft die häufig bei Fahrzeugen, insbesondere Schienenfahrzeugen, gewünschte Möglichkeit, die nutzbare Fläche des Tisches variieren zu können. Um die Ergänzungs-Tischplatte in der vollständig ausgezogenen Position bündig mit der Grund-Tischplatte zu halten, muss die Bewegungsbahn der Ergänzungs-Tischplatte so gestaltet sein, dass sie sich unter die Grund-Tischplatte schieben lässt. Da die Bewegungsbahn also insgesamt von der vollständig ausgezogenen zur vollständig eingeschobenen Position abfallend ist, ist für die vollständig ausgezogene Position eine definierte Arretierung erforderlich.

Nachteilig an dieser Lösung ist es jedoch, dass bei einem Aufprall von Fahrgästen im Fall von Kollisionen eine Bewegung der Ergänzungs-Tischplatte in horizontaler Richtung blockiert ist. Denn der oben angesprochene bekannte Tisch ist derart ausgelegt, dass zunächst eine Vorderkante der Ergänzungs-Tischplatte manuell anzuheben ist, bevor diese Tischplatte einschiebbar ist. Dies hat zur Folge, dass auch im Crash-Fall die Ergänzungs-Tischplatte in der vollständig ausgezogenen Stellung arretiert bleibt und daher direkt auftretende Aufprallkräfte auch beispielsweise auf den empfindlichen Bauchbereich eines Fahrgastes übertragen werden.

Die Dokumente DE 40 01 448 C1 und EP 2 215 926 A1 offenbaren auch verbreiterbare Tische mit Einzugsystemen.

Ausgehend hiervon liegt der Erfindung die Aufgabe zugrunde, den eingangs genannten erweiterbaren Tisch derart weiterzuentwickeln, dass seine Crash-Tauglichkeit erhöht wird.

Diese Aufgabe wird bei dem eingangs genannten verbreiterbaren Tisch durch die kennzeichnenden Merkmale des Anspruchs 1 gelöst.

Danach ist vorgesehen, dass die Ergänzungs-Tischplatte zusätzlich mittels einer Hilfsführung geführt ist, die einen Führungsarm aufweist, der mit seinem nach außen gerichteten Ende an der Ergänzungs-Tischplatte befestigt ist und über sein freies Ende zur Arretierung der Ergänzungs-Tischplatte in ihrer vollständig ausgezogenen Position mit einer vertikal unterhalb der Grund-Tischplatte angeordneten primären Führungsplatte in Eingriff bringbar ist, und die primäre Führungsplatte nachgiebig gelagert und zur Einnahme einer Grundposition in Horizontalrichtung gehalten ist sowie derart mittels einer parallel zur primären Führungsplatte angeordneten und ebenfalls mit der Führungsrolle zusammenwirkenden sekundären Führungsplatte geführt ist, dass bei Überschreiten einer horizontal von der Ergänzungs-Tischplatte über den Führungsarm auf die Führungsplatte ausgeübten Kraft die Arretierung der Ergänzungs-Tischplatte gegenüber der Grund-Tischplatte aufhebbar ist.

In dieser Weise wird die erforderliche Arretierung der Ergänzungs-Tischplatte gegenüber der Grund-Tischplatte im Crash-Fall, bei dem beispielsweise durch einen Fahrgast eine horizontal wirkende Kraft auf die Ergänzungs-Tischplatte ausgeübt wird, wirksam aufgehoben. Somit wird es dann möglich, dass die Ergänzungs-Tischplatte eine Ausweichbewegung nach unten vollführt, die ähnlich gerichtet ist, wie bei normaler Handhabung.

Bevorzugt kann zur Arretierung der Ergänzungs-Tischplatte gegenüber der Grund-Platte in der vollständig ausgefahrenen Position der Ergänzungs-Tischplatte die primäre Führungsplatte eine Ausnehmung aufweisen, die sich von ihrer Unterseite aus in Richtung auf die Grund-Tischplatte erstreckt und in die das freie Ende des Führungsarms eingreift. Diese Art der Arretierung ist ein Beispiel für eine in Horizontalrichtung wirkende, durch eine Bewegung der Innenseite der Ergänzungs-Tischplatte nach unten lösbare Arretierung.

Der Führungsarm kann an seinem freien Ende mit einer Führungsrolle ausgestattet sein, die zum Zusammenwirken mit der primären Führungsplatte und der sekundären Führungsplatte ausgebildet und angeordnet ist. Statt einer solchen Führungsrolle können jedoch auch andere Ausgestaltungen des freien Endes des Führungsarms zur Anwendung kommen. Grundsätzlich ist es ausreichend, wenn dieses Ende derart ausgebildet ist, dass sich ein Formschluss mit den zusammenwirkenden Rändern der primären und sekundären Führungsplatte ergeben kann.

Die primäre Führungsplatte kann zur Einnahme der Grundposition in horizontaler Richtung mittels einer Feder vorgespannt sein. Eine solche Ausgestaltung ist ein Beispiel für eine reversible Halterung für die primäre Führungsplatte in ihrer Grundposition.

Alternativ dazu ist auch eine irreversible Halterung der primären Führungsplatte möglich. Beispielsweise kann die primäre Führungsplatte zur Einnahme der Grundposition mittels eines zerstörbaren Halteelementes gehalten sein. Ein Beispiel für eine solche Ausführung ist ein Bolzen, der die primäre Führungsplatte in ihrer Grundposition hält, jedoch bei Einwirken einer vorbestimmten Horizontalkraft abgeschert wird.

Die primäre Führungsplatte kann bei einer Bewegung der Ergänzungs-Tischplatte in Richtung der vollständig eingefahrenen Position mittels Führungsflächen an der sekundären Führungsplatte schräg aufwärts geführt sein. Diese Aufwärtsbewegung kann dann die gewünschte Lösung der Arretierung der Ergänzungs-Tischplatte ermöglichen. Diese Führungsflächen sind typischer Weise Keilflächen, die in Bewegungsrichtung der primären Führungsplatte schräg aufwärts verlaufen.

Die Aufwärtsbewegung der primären Führungsplatte kann in eine Hebebewegung der Grund-Tischplatte umgesetzt sein, wobei die Grund-Tischplatte dann in ihrer Hebebewegung mittels einer Anlagefläche eines Tisch-Grundkörpers geführt wäre. Durch ein solches Anheben der Grund-Tischplatte wird die Führung der Ergänzungs-Platte bei ihrer Einwärtsbewegung an der unteren Vorderkante der Grund-Platte vorbei vereinfacht.

Dabei ist jedoch zu berücksichtigen, dass grundsätzlich auch Ausführungsformen möglich sind, bei denen auf eine Führung der Grund-Tischplatte in ihrer Aufwärtsbewegung vollständig verzichtet wird. Es kommt lediglich darauf an, dass in irgendeiner Weise die Grund-Tischplatte derart bewegt wird, dass die Ergänzungs-Tischplatte in ihrer Bewegung gemäß der Hauptführung schräg nach unten ungehindert ist.

Alternativ ist es auch möglich, dass die primäre Führungsplatte derart mit der Grund-Tischplatte verbunden ist, dass diese eine Aufwärtsbewegung der primären Führungsplatte folgt. Bei dieser Ausführung kann beispielsweise die vertikal angeordnete primäre Führungsplatte mit ihrer ebenen Oberseite an der Unterseite der Grund-Tischplatte befestigt sein.

Die sekundäre Führungsplatte kann in horizontaler Bewegungsrichtung der primären Führungsplatte derart hinter der primären Führungsplatte in ihrer Grundposition angeordnet sein, dass die Führungsrolle gerade an der sekundären Führungsplatte und an einem Anschlag der primären Führungsplatte anliegt. Dies hat zur Folge, dass in dem Fall, wenn keine ausreichende Horizontalkraft zum Zurückdrücken der primären Führungsplatte vorliegt, die Einschubbewegung für die Ergänzungs-Tischplatte gemäß einer normalen Betriebsweise erfolgen kann. In diesem Fall wird die Hilfsführung von der primären Führungsplatte bestimmt. Wenn jedoch eine zum Zurückdrücken der primären Führungsplatte ausreichende Horizontalkraft anliegt, wirkt die Führungsrolle, die am freien Ende des Führungsarms vorgesehen ist, unter Zurückschieben der primären Führungsplatte mittels des Anschlags mit der sekundären Führungsplatte zusammen. Der sich dadurch ergebende Führungsweg bringt es mit sich, dass die primäre Führungsplatte und damit auch die darüber liegende Grund-Tischplatte angehoben wird.

Ein Ausführungsbeispiel der Erfindung wird nachfolgend unter Bezugnahme auf die Zeichnung noch näher erläutert.

Es zeigen:
- Figur 1: eine Seitenansicht eines erweiterbaren Tischs in seiner ausgezogenen Position in einer normalen Betriebsweise gemäß einer ersten Ausführungsform,
- Figur 2: eine Querschnittsansicht einer Einzelheit des erweiterbaren Tischs von Figur 1,
- Figur 3: eine Seitenansicht eines erweiterbaren Tischs in seiner ausgezogenen Position in einer normalen Betriebsweise gemäß einer zweiten Ausführungsform,
- Figur 4: eine Querschnittsansicht des Tisches von Figur 1 in einer teilweise eingefahrenen Position in einer normalen Betriebsweise,
- Figur 5: eine Querschnittsansicht des Tisches von Figur 1 in einer vollständig eingefahrenen Position in einer normalen Betriebsweise,
- Figur 6: eine Querschnittsansicht des Tisches von Figur 1 in einer geringfügig eingefahrenen Position in einer Crash-Betriebsweise,
- Figur 7: eine Querschnittsansicht des Tisches von Figur 1 in einer gegenüber Figur 6 weiter eingefahrenen Position in einer Crash-Betriebsweise und
- Figur 8: eine Querschnittsansicht des Tisches von Figur 1 in einer vollständig eingefahrenen Position in einer Crash-Betriebsweise.

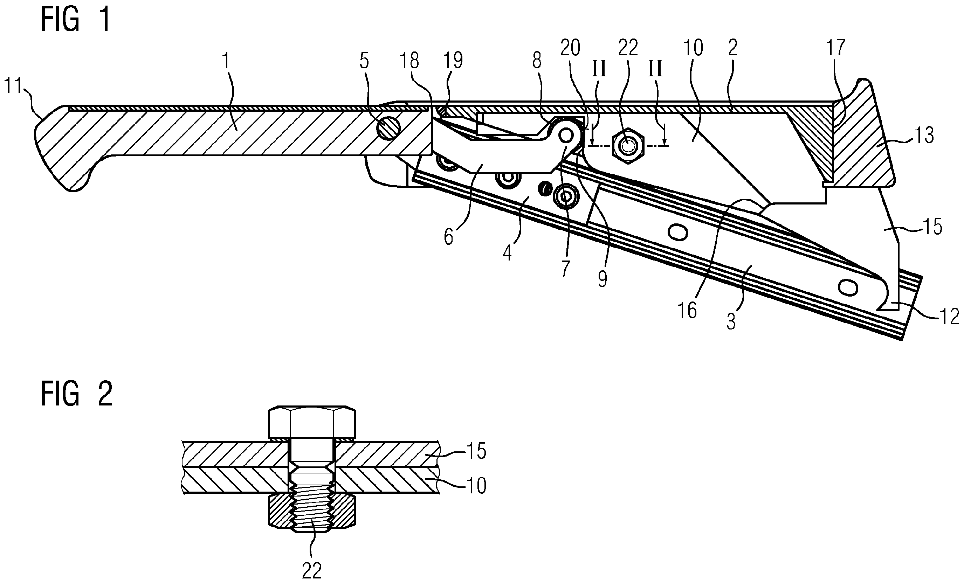

In Figur 1 befindet sich ein verbreiterbarer Tisch, der beispielsweise im Fahrgastraum eines Schienenfahrzeugs zum Einsatz kommen kann, in einer Position, bei der eine Ergänzungs-Tischplatte 1 vollständig ausgefahren ist. In diesem Betriebszustand fluchtet eine Oberfläche der Ergänzungs-Tischplatte 1 mit der Oberfläche einer Grund-Tischplatte 2. Eine Bewegung der Ergänzungs-Tischplatte 1 von der in Figur 1 dargestellten vollständig ausgefahrenen in eine vollständig eingefahrene Position wird mitbestimmt durch eine Hauptführung und eine Hilfsführung. Wesentliches Element der Hauptführung ist eine C-förmige Schiene 3, die von einer Vorderkante der Tisch-Grundplatte 2 aus schräg nach unten in einen Bereich unterhalb der Tisch-Grundplatte 2 verläuft. In der C-förmigen Schiene 3 ist im vorliegenden Ausführungsbeispiel ein Rollenschlitten 4 geführt, der an seinem vorderen Ende über eine parallel zu der Vorderkante der Grund-Tischplatte 2 verlaufende Drehachse 5 mit der Ergänzungs-Tischplatte 1 verbunden ist.

Die Ergänzungs-Tischplatte 1 ist in ihrer ausgezogenen Position mit Hilfe eines Führungsarms 6 arretiert. Dieser Führungsarm 6 ist mit seinem der Ergänzungs-Tischplatte 1 zugewandten Ende an der innen gelegenen Stirnfläche der Ergänzungs-Tischplatte 1 befestigt und bildet mit dieser Ergänzungs-Tischplatte 1 eine starre Einheit. Der Führungsarm 6 verläuft von der inneren Stirnseite der Ergänzungs-Tischplatte 1 aus zunächst schräg nach unten, dann parallel zur Grund-Tischplatte 2 und sodann schräg nach oben zu seinem freien Ende 7. Das freie Ende 7 des Führungsarms 6 trägt eine Führungsrolle 8. Das freie Ende 7, insbesondere die Führungsrolle 8, greift von unten in eine Ausnehmung 9 einer primären Führungsplatte 10 - in den Fig. 1 bis 3 in ihrer Grundposition dargestellt - derart ein, dass die Führungsrolle 8 in der Ausnehmung 9 arretiert ist. Bei im Normalbetrieb des Tisches auftretenden Horizontalkräften auf die Ergänzungs-Tischplatte 1 bewirkt diese Arretierung, dass die Ergänzungs-Tischplatte 1 relativ zur Grund-Tischplatte 2 nicht beweglich ist.

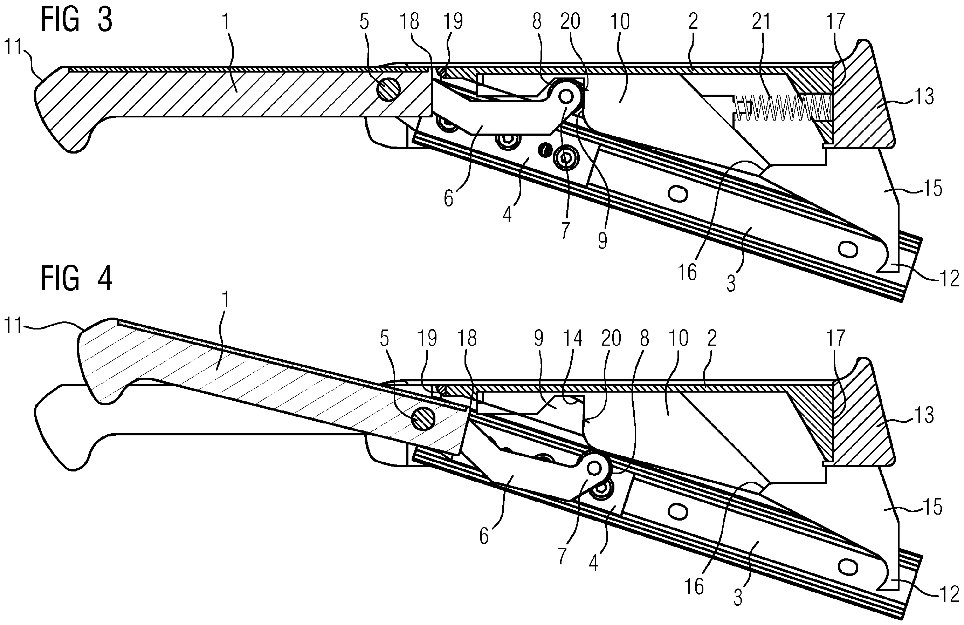

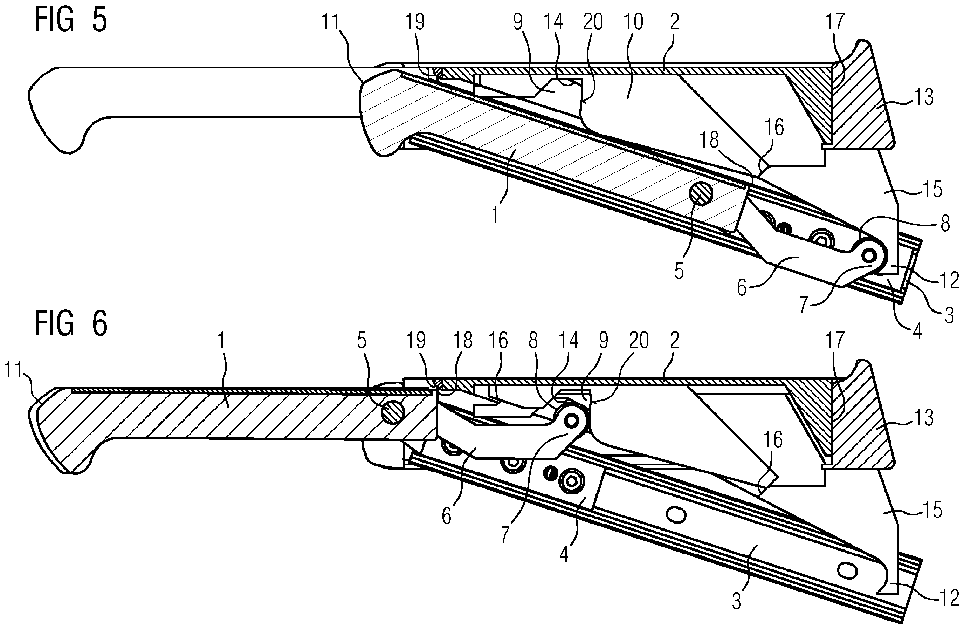

Wenn somit im normalen Betrieb des Tisches eine Vorderkante 11 der Ergänzungs-Tischplatte 1 manuell angehoben wird, verfährt der Rollenschlitten 4 schräg nach unten entlang der C-förmigen Schiene 3 (Hauptführung) und die Führungsrolle 8 verlässt die Ausnehmung 9 zum Aufheben der Arretierung und rollt in stetigen Bewegung entlang dem zugewandten Außenrand der primären Führungsplatte 10 ebenfalls schräg nach unten ab (Hilfsführung), wie es in den Figuren 4 und 5 veranschaulicht ist. In Figur 5 hat die Ergänzungs-Tischplatte 1 dann ihre vollständig eingefahrene Position erreicht, wobei die Führungsrolle 8 an einem Anschlag 12 zur Anlage gelangt.

Es ist ersichtlich, dass bei dem anhand der Figuren 1 bis 5 veranschaulichten Normalbetrieb des Tisches die primäre Führungsplatte 10 ebenso wie die Grund-Tischplatte 2 ortsfest bleiben.

Im Crash-Fall ergibt sich nunmehr eine andere Führung der Ergänzungs-Tischplatte 1 von der in Figur 1 dargestellten, vollständig ausgefahrenen Position aus. Dabei ist zu berücksichtigen, dass die primäre Führungsplatte 10 mit ihrer Oberseite an der Unterseite der Grund-Tischplatte 2 anliegt. Die Figuren 1 und 2 veranschaulichen eine erste Variante zur Fixierung der primären Führungsplatte 10 gegenüber einer einwärts gerichteten, horizontalen Krafteinwirkung. Bei der Ausführungsform nach Figur 1 wird die primäre Führungsplatte 10 mittels eines Scherbolzens 22 als Beispiel für ein zerstörbares Halteelement am Platz gehalten. Bei Auftreten einer vorgegebenen, horizontal gerichteten Kraft, ausgeübt von dem freien Ende 7 des Führungsarms 6 auf die primäre Führungsplatte 10, wird der Scherbolzen 22 zerstört und gibt eine Ausweichbewegung der primären Führungsplatte 10 frei. Wie Figur 2 zu entnehmen ist, verbindet der Scherbolzen 22 die primäre Führungsplatte 10 unmittelbar mit der daran anliegenden sekundären Führungsplatte 15. Eine geeignet bemessene Verjüngung des Querschnitts des Scherbolzens 22 bewirkt sein Abscheren bei Auftreten der vorgegebenen Horizontalkraft. Es ist hervorzuheben, dass die anhand von Figuren 1 und 2 dargestellte Fixierung der primären Führungsplatte 10 irreversibel ist. Die Fixierung mittels dem Scherbolzen 22 ist als kostengünstige Ausführungsvariante zu betrachten.

Dem gegenüber zeigt Figur 3 eine andere Variante zur Lagefixierung der primären Führungsplatte 10 gegenüber horizontal wirkenden Kräften. Bei der Ausführung nach Figur 3 ist eine Feder 21 zwischen einem rückwärtigen Ende der primären Führungsplatte 10 und einem Tisch-Grundkörper 13 horizontal angeordnet. Die Feder 21 besitzt eine vorbestimmte Spannkraft. Diese ist derart bemessen, dass lediglich bei Auftreten vorbestimmter Horizontalkräfte, die einen Crash-Fall wiedergeben, eine Nachgiebigkeit der primären Führungsplatte 10 gegeben ist. Die Ausführung der Fixierung der primären Führungsplatte 10 mittels der Feder 21 ist als reversibel zu bezeichnen.

Figur 6 zeigt nunmehr den Fall, dass eine horizontal auf die Vorderkante 11 der Ergänzungs-Tischplatte 1 einwirkende Kraft stärker als die vorbestimmte Spannkraft des Spannmittels ist. Wie aus der Figur ersichtlich ist, liegt in diesem Fall die Führungsrolle 8 an einem Rand 14 einer sekundären Führungsplatte 15 an, die mit dem Tisch-Grundkörper 13 starr verbunden und somit ortsfest ist, und nunmehr für die Hilfsführung maßgeblich ist.

Die primäre Führungsplatte 10 und die sekundäre Führungsplatte 15 sind jeweils vertikal unterhalb der Grund-Tischplatte 2 angeordnet und liegen unmittelbar nebeneinander, so dass die entsprechend breit ausgeführte Führungsrolle 8 gleichzeitig mit beiden zusammen wirken kann. Die sekundäre Führungsplatte 15 ist in horizontaler Bewegungsrichtung der primären Führungsplatte 10 derart hinter der primären Führungsplatte 10 in ihrer Grundposition angeordnet ist, dass die Führungsrolle 8 gerade an der sekundären Führungsplatte 15 anliegt. Dies bedeutet, dass die Hilfsführung der Ergänzungs-Tischplatte 1 beim Nachgeben der primären Führungsplatte 10 unmittelbar von der sekundären Führungsplatte 15 übernommen wird.

Die horizontale Einwärtsbewegung der Ergänzungs-Tischplatte 1 bewirkt, dass die Führungsrolle 8 die primäre Führungsplatte 10 über einen zugeordneten, als Anschlag wirkenden vertikalen Randabschnitt 20 der primären Führungsplatte 10 betätigt. Die ausgelöste Bewegung der Führungsplatte 10 wird bestimmt durch keilförmige Anlageflächen 16 der sekundären Führungsplatte 15, die in Bewegungsrichtung der primären Führungsplatte 10 schräg nach oben verlaufen. Daher drückt die primäre Führungsplatte 10 von unten gegen die Grund-Tischplatte 2, die ebenfalls beweglich gelagert ist. Die von der schrägen Aufwärtsbewegung der primären Führungsplatte 10 bewirkte, hier rein vertikale Hebebewegung der Tisch-Grundplatte 2 wird von einer Anlagefläche 17 bestimmt. Da die Bewegung der primären Führungsplatte 10 schräg aufwärts, diejenige der Grund-Tischplatte jedoch vertikal aufwärts verläuft, kommt es an der Unterseite der Grund-Tischplatte 2 zu einer Gleitbewegung der Oberseite der primären Führungsplatte 10 relativ zur Unterseite der Grund-Tischplatte 2.

Die Führungsrolle 8 bewegt sich stetig entlang des Randes 14, der eben ausgebildet ist und schräg nach unten verläuft, und zwar bis hin zu dem Anschlag 12.

Ergebnis der erläuterten Bewegungsführung für die Ergänzungs-Tischplatte 1 ist es, dass die Arretierung der Führungsrolle 8 in der Ausnehmung 9 der primären Führungsplatte 10 auch bei rein horizontal wirkenden Kräften aufgehoben wird, da die primäre Führungsplatte 10 eine Ausweichbewegung vollführt. Diese Ausweichbewegung wird zudem durch geeignete Führung der Ausweichbewegung der primären Führungsplatte 10 durch die sekundäre Führungsplatte 15 derart umgesetzt, dass unter Mitwirkung der Anlageflächen 16, 17 die Grund-Tischplatte 2 derart angehoben wird, dass eine obere Hinterkante 18 der Ergänzungs-Tischplatte 1 unter einer unteren Vorderkante 19 der Grund-Tischplatte 2 vorbeiführbar ist.

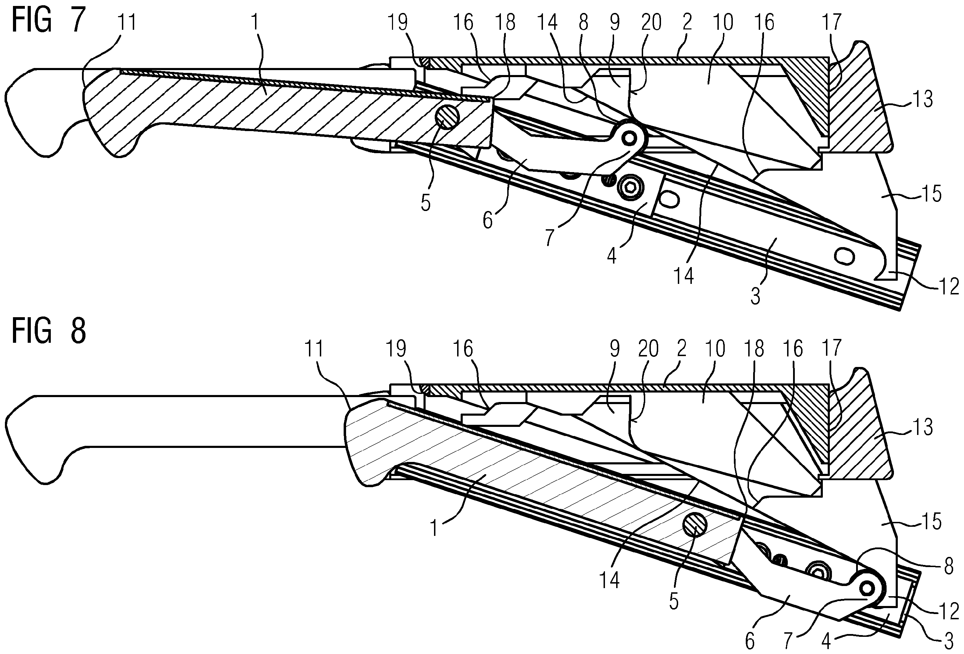

Die Bewegung der Ergänzungs-Tischplatte 1 bis in die vollständig eingefahrene Position ist weiter in den Figuren 7 und 8 veranschaulicht, wobei in Figur 7 die Endposition der primären Führungsplatte 10 und damit auch die maximale Hebeposition der Tisch-Grundplatte 2 erreicht ist.

Die vorstehende Beschreibung bezieht sich auf eine Seite des erweiterbaren Tisches, dessen andere Seite hinsichtlich der Ausbildung von Haupt- und Hilfsführung spiegelbildlich gestaltet ist.

## Patentansprüche

1. Verbreiterbarer Tisch mit einer Grund-Tischplatte (2) und mit mindestens einer neben der Grund-Tischplatte (2) platzierbaren Ergänzungs-Tischplatte (1), die als eine mittels einer Hauptführung schräg nach unten unter die Grund-Tischplatte (2) führbare Einschubplatte ausgebildet ist, wobei sie zwischen einer vollständig ausgefahrenen und einer vollständig eingefahrenen Position verfahrbar ist, und für die vollständig ausgefahrene Position eine Arretierung der Ergänzungs-Tischplatte (1) gegenüber der Grund-Tischplatte (2) derart vorgesehen ist, dass ihre Horizontalbewegung in Richtung auf die Grund-Tischplatte (2) verhindert ist, wobei die Ergänzungs-Tischplatte (1) zusätzlich mittels einer Hilfsführung geführt ist, die einen Führungsarm (6) aufweist, der mit seinem nach außen gerichteten Ende an der Ergänzungs-Tischplatte (1) befestigt ist und über sein freies Ende (7) zur Arretierung der Ergänzungs-Tischplatte (1) in ihrer vollständig ausgefahrenen Position mit einer vertikal unterhalb der Grund-Tischplatte (2) angeordneten primären Führungsplatte (10) in Eingriff bringbar ist, und
die primäre Führungsplatte (10) nachgiebig gelagert und zur Einnahme einer Grundposition in Horizontalrichtung gehalten ist sowie derart mittels einer parallel zur primären Führungsplatte (10) angeordneten und ebenfalls mit dem Führungsarm (6) zusammenwirkenden sekundären Führungsplatte (15) geführt ist, dass bei Überschreiten einer horizontal von der Ergänzungs-Tischplatte (1) über den Führungsarm (6) auf die primäre Führungsplatte (10) ausgeübten Kraft die Arretierung der Ergänzungs-Tischplatte (1) gegenüber der Grund-Tischplatte (2) aufhebbar ist.

2. Verbreiterbarer Tisch nach Anspruch 1,
**dadurch gekennzeichnet, dass**
zur Arretierung der Ergänzungs-Tischplatte (1) gegenüber der Grund-Tischplatte (2) in der vollständig ausgefahrenen Position der Ergänzungs-Tischplatte (1) die primäre Führungsplatte (10) eine Ausnehmung (9) aufweist, die sich von ihrer Unterseite aus in Richtung auf die Grund-Tischplatte (2) erstreckt und in die das freie Ende (7) des Führungsarms (6) eingreift.

3. Verbreiterbarer Tisch nach einem der Ansprüche 1 oder 2,
**dadurch gekennzeichnet, dass**
der Führungsarm (6) an seinem freien Ende (7) mit einer Führungsrolle (8) ausgestattet ist, die zum Zusammenwirken mit der primären Führungsplatte (10) und der sekundären Führungsplatte (15) ausgebildet und angeordnet ist.

4. Verbreiterbarer Tisch nach einem der Ansprüche 1 bis 3,
**dadurch gekennzeichnet, dass**
die primäre Führungsplatte (10) zur Einnahme der Grundposition in Horizontalrichtung mittels einer Feder (21) vorgespannt ist.

5. Verbreiterbarer Tisch nach einem der Ansprüche 1 bis 3,
**dadurch gekennzeichnet, dass**
die primäre Führungsplatte (10) zur Einnahme der Grundposition mittels eines zerstörbaren Halteelementes (22) gehalten ist.

6. Verbreiterbarer Tisch nach einem der Ansprüche 1 oder 2,
**dadurch gekennzeichnet, dass**
die primäre Führungsplatte (10) bei einer Bewegung der Ergänzungs-Tischplatte (1) in Richtung der vollständig eingefahrenen Position mittels Führungsflächen (16) an der sekundären Führungsplatte (15) schräg aufwärts geführt ist.

7. Verbreiterbarer Tisch nach Anspruch 6,
**dadurch gekennzeichnet, dass**
die Aufwärtsbewegung der primären Führungsplatte (10) in eine Hebebewegung der Grund-Tischplatte (2) umgesetzt ist, wobei die Grund-Tischplatte (2) in ihrer Hebebewegung mittels einer Anlagefläche (17) eines Tisch-Grundkörpers (13) geführt ist.

8. Verbreiterbarer Tisch nach Anspruch 6,
**dadurch gekennzeichnet, dass**
die primäre Führungsplatte (10) derart mit der Grund-Tischplatte (2) verbunden ist, dass diese einer Aufwärtsbewegung der primären Führungsplatte (10) folgt.

9. Verbreiterbarer Tisch nach einem der Ansprüche 1 bis 8,
**dadurch gekennzeichnet, dass**
die sekundäre Führungsplatte (15) in horizontaler Bewegungsrichtung der primären Führungsplatte (10) derart hinter der primären Führungsplatte (10) in ihrer Grundposition angeordnet ist, dass die Führungsrolle (8) gerade an der sekundären Führungsplatte (15) und an einem Anschlag (20) der primären Führungsplatte (10) anliegt.

## Claims

1. Extensible table comprising a main table top (2) and comprising at least one supplementary table top (1) which can be placed next to the main table top (2) and is in the form of an insertable leaf which is guided obliquely downwards under the main table top (2) by means of a main guide, wherein said insertable leaf is movable between a completely extended and a completely retracted position, and, for the completely extended position, locking of the supplementary table top (1) in relation to the main table top (2) is provided in such a manner that the horizontal movement of said supplementary table top (1) in the direction of the main table top (2) is prevented, wherein the supplementary table top (1) is additionally guided by means of an auxiliary guide which has a guide arm (6) which is fastened at its outwardly directed end to the supplementary table top (1) and can be brought into engagement via its free end (7) with a primary guide plate (10), which is arranged vertically below the main table top (2), in order to lock the supplementary table top (1) in its completely extended position, and the primary guide plate (10) is mounted flexibly and is held in order to take up a main position in the horizontal direction and is guided by means of a secondary guide plate (15), which is arranged parallel to the primary guide plate (10) and likewise interacts with the guide arm (6), in such a manner that, when a force exerted horizontally from the supplementary table top (1) on the primary guide plate (10) via the guide arm (6) is exceeded, the locking of the supplementary table top (1) in relation to the main table top (2) can be undone.

2. Extensible table according to Claim 1, **characterized in that**, in order to lock the supplementary table top (1) in relation to the main table top (2) in the completely extended position of the supplementary table top (1), the primary guide plate (10) has a recess (9) which extends from the lower side thereof in the direction of the main table top (2) and in which the free end (7) of the guide arm (6) engages.

3. Extensible table according to either of Claims 1 and 2, **characterized in that** the guide arm (6) is equipped at its free end (7) with a guide roller (8) which is designed and arranged for interaction with the primary guide plate (10) and the secondary guide plate (15).

4. Extensible table according to one of Claims 1 to 3, **characterized in that** the primary guide plate (10) is prestressed by means of a spring (21) in order to take up the main position in the horizontal direction.

5. Extensible table according to one of Claims 1 to 3, **characterized in that** the primary guide plate (10) is held by means of a destructible holding element (22) in order to take up the main position.

6. Extensible table according to either of Claims 1 and 2, **characterized in that**, during a movement of the supplementary table top (1) in the direction of the completely retracted position, the primary guide plate (10) is guided obliquely upwards by means of guide surfaces (16) on the secondary guide plate (15).

7. Extensible table according to Claim 6, **characterized in that** the upwards movement of the primary guide plate (10) is converted into a lifting movement of the main table top (2), wherein the main table top (2) is guided in its lifting movement by means of a contact surface (17) of a table main body (13).

8. Extensible table according to Claim 6, **characterized in that** the primary guide plate (10) is connected to the main table top (2) in such a manner that the latter follows an upwards movement of the primary guide plate (10).

9. Extensible table according to one of Claims 1 to 8, **characterized in that** the secondary guide plate (15) is arranged in the horizontal direction of movement of the primary guide plate (10) behind the primary guide plate (10) in the main position thereof in such a manner that the guide roller (8) lies precisely against the secondary guide plate (15) and against a stop (20) of the primary guide plate (10).

## Revendications

1. Table extensible, comprenant un plateau (2) de base et au moins un plateau (1) de complément pouvant être placé à côté du plateau (2) de base et constitué sous la forme d'un plateau d'insertion pouvant être guidé au moyen d'un guidage principal en oblique vers le bas sous le plateau (2) de base, plateau d'insertion qui peut être déplacé entre une position déployée complètement et une position escamotée complètement et il est prévu, pour la position déployée complètement, un arrêt du plateau (1) de complément par rapport au plateau (2) de base, de manière à empêcher son déplacement horizontal en direction du plateau (2) de base, dans laquelle
le plateau (1) de complément est guidé supplémentairement au moyen d'un guidage auxiliaire, qui a un bras (6) de guidage, fixé par son extrémité dirigée vers l'extérieur au plateau (1) de complément et pouvant, par son extrémité (7) libre, pour arrêter le plateau (1) de complément dans sa position déployée complètement, être mis en prise avec un plateau (10) de guidage primaire, disposé en dessous du plateau (2) de base et
le plateau de guidage primaire est monté de manière à céder élastiquement et, pour prendre une position de base, est maintenu dans la direction horizontale,ainsi que guidé au moyen d'un plateau (15) de guidage secondaire, parallèle au plateau (10) de guidage primaire et coopérant également avec le bras (6) de guidage, de manière à ce que, si une force appliquée horizontalement par le plateau (1) de complément au plateau (10) de guidage primaire, par l'intermédiaire du bras (6) de guidage est dépassée, l'arrêt du plateau (1) de complément par rapport au plateau (2) de base, peut être levé.

2. Table extensible suivant la revendication 1,
**caractérisée en ce que**
pour arrêter le plateau (1) de complément par rapport au plateau (2) de base, dans la position déployée complètement du plateau (1) de complément, le plateau (10) de guidage primaire a un évidement (9), qui s'étend, à partir de son côté inférieur, en direction du plateau (2) de base et dans lequel pénètre l'extrémité (7) libre du bras (6) de guidage.

3. Table extensible suivant l'une des revendications 1 ou 2,
**caractérisée en ce que**
le bras (6) de guidage est équipé à son extrémité (7) libre d'un galet (8) de guidage, qui est constitué et disposé pour coopérer avec le plateau (10) de guidage primaire et avec le plateau (15) de guidage secondaire.

4. Table extensible suivant l'une des revendications 1 à 3,
**caractérisée en ce que**
le plateau (10) de guidage primaire est, pour prendre la position de base dans la direction horizontale, précontraint au moyen d'un ressort (21).

5. Table extensible suivant l'une des revendications 1 à 3,
**caractérisée en ce que**
le plateau (10) de guidage primaire est, pour prendre la position de base, maintenu au moyen d'un élément (22) de maintien pouvant être détruit.

6. Table extensible suivant l'une des revendications 1 ou 2,
**caractérisée en ce que**
le plateau (10) de guidage primaire est, lors d'un déplacement du plateau (1) de complément dans la direction de la position escamotée complètement, guidé en oblique vers le haut sur le plateau (15) de guidage secondaire au moyen de surfaces (16) de guidage.

7. Table extensible suivant la revendication 6,
**caractérisée en ce que** le déplacement vers le haut du plateau (10) de guidage primaire est transformé en un mouvement de soulèvement du plateau (2) de base, le plateau (2) de base étant, dans son mouvement de soulèvement, guidé au moyen d'une surface (17) d'application d'un corps (13) de base de la table.

8. Table extensible suivant la revendication 6,
**caractérisée en ce que** le plateau (10) de guidage primaire est relié au plateau (2) de base, de manière à ce que celui-ci suive un déplacement vers le haut du plateau (10) de guidage primaire.

9. Table extensible suivant l'une des revendications 1 à 8,
**caractérisée en ce que** le plateau (15) de guidage secondaire est, dans la direction de déplacement horizontal du plateau (10) de guidage primaire, disposé derrière le plateau (10) de guidage primaire dans sa position de base, de manière à ce que le galet (8) de guidage s'applique précisément au plateau (15) de guidage secondaire et à une butée (20) du plateau (10) de guidage primaire.
